# NEUE EUROPÄISCHE PATENTSCHRIFT

(11) **EP 2 796 189 B2**
(45) Veröffentlichungstag und Bekanntmachung des Hinweises auf die Entscheidung über den Einspruch: **25.12.2019**
(45) Hinweis auf die Patenterteilung: 18.01.2017
(21) Anmeldenummer: 13002207.2
(22) Anmeldetag: 26.04.2013
(51) Int. Cl.: B01F 7/00, B01F 7/04, B01F 15/00, B01F 15/02, B01J 19/20

(54) **Zweiwelliger Reaktor/Mischer**
Two-shaft reactor/mixer
Réacteur/mélangeur à deux arbres

(43) Veröffentlichungstag der Anmeldung: 29.10.2014
(60) Teilanmeldung: 14001433.3
(73) Patentinhaber: Buss-SMS-Canzler GmbH, 35510 Butzbach (DE)
(72) Erfinder: Peters, Hans, 79576 Weil (DE); Mohr, Steffen, 35516 Münzenberg (DE)
(74) Vertreter: Schaad, Balass, Menzl & Partner AG

(56) Entgegenhaltungen:
- EP-A1- 1 101 525
- EP-A1- 1 247 454
- EP-A1- 2 527 771
- EP-A2- 2 030 675
- WO-A1-90/05452
- CH-A5- 664 704
- DE-A1- 10 246 639
- DE-A1- 19 536 944
- DE-A1-102004 014 163
- DE-B3- 10 342 982
- DE-B3-102007 034 875
- DE-C2- 2 349 106
- DE-U1- 29 715 101
- US-A- 2 283 008
- US-A- 3 869 111
- US-A- 4 127 372
- US-A- 4 185 925
- US-A1- 2012 269 028
- US-B1- 8 177 414

## Beschreibung

Die vorliegende Erfindung betrifft einen zumindest zweiwelligen Reaktor/Mischer, insbesondere zur verfahrenstechnischen Behandlung - z.B. zum Entgasen - von hochviskosem und/oder feststoffhaltigem Reaktions- und Mischgut. Die in Rede stehenden Reaktoren/Mischer kommen beispielsweise bei der Erzeugung und Verarbeitung von Polymeren und/oder Kunststoffen sowie Kautschuk und/oder Elastomeren zur Anwendung, d.h. in Fällen, in denen eine gute Mischwirkungen und gegebenenfalls auch eine schnelle Erneuerung von freien Oberflächen zum Zwecke der Verdampfung bzw. Entgasung gewährleistet werden muss. Des Weiteren sollen derartige Rektoren/Mischer über ein möglichst gutes Selbstreinigungspotential verfügen, damit möglichst wenig Krustenbildung an den Reaktorwänden bzw. an den Mischinstrumenten auftritt. Dies kann nämlich zu störenden Nebenreaktiönen im Reaktorraum führen und damit zu Verunreinigungen und Inhomogenität des jeweils herzustellenden Produkts.

Ein selbstreinigender Reaktor/Mischer ist aus der EP 0 715 882 A2 bekannt. Dieser Reaktor/Mischer besteht aus zwei oder mehr parallelen, gleichsinnig rotierenden Wellen, auf denen sich axial versetzte Scheiben mit nicht notwendigerweise kreisförmigem Umfang befinden. Die Scheiben weisen auf ihrem Umfang verteilte Abstreifer auf. Der Reaktor/Mischer wird von einem Gehäuse umschlossen. Der Reaktor/Mischer soll so ausgestaltet sein, dass alle Oberflächen der Abstreifer kinematisch gereinigt werden und dass alle nach aussen weisenden Flächen der Abstreifer einer Welle in einem beliebigen Radialschnitt durch den Mischer konvex sind und von einer benachbarten Welle oder deren Abstreifern oder vom Gehäuse gereinigt werden. Zudem sind alle nach innen weisenden Flächen der Abstreifer einer Welle in einem beliebigen Radialschnitt durch den Mischer konkav und werden von Abstreifern einer benachbarten Welle gereinigt. Bei der Reinigung des Gehäuses durch die Abstreifer zwischen Gehäusewand und der reinigenden Fläche des Abstreifers treten lediglich produktseitige Winkel grösser als 90 auf. Zudem treten bei der gegenseitigen Reinigung der Abstreifer untereinander zwischen der gereinigten und der reinigenden Fläche der einander berührenden Abstreifer nur produktseitige Winkel grösser als 60°, bevorzugt grösser gleich 90° auf.

Es hat sich jedoch in der Praxis herausgestellt, dass bei diesem zweiwelligen Reaktor/Mischer insbesondere die Abreinigung der Gehäuseinnenwand noch verbesserungsfähig ist und dass zudem noch Bereiche mit relativ geringer Produktdurchmischung vorhanden sind. Insbesondere wird die Innenwand des Gehäuses durch den Spalt, den die an den Scheiben befestigten Abstreifer in axialer Richtung bilden, nicht vollständig kinematisch abgereinigt. Dies war insofern überraschend, als dass bei diesem Reaktor/Mischer aufgrund der zweiwelligen Durchmischung relativ grosse Kräfte entstehen und zwar insbesondere in den Bereichen, in denen die Mischelemente bzw. Knetbarren aufeinander treffen.

Der Austrag des jeweils durchmischten Produkts aus herkömmlichen Reaktoren/Mischern erfolgt üblicher Weise über eine Schneckenvorrichtung, welche im Enddeckel des Gehäuses, d.h. am nicht angetriebenen Ende des Rektors/Mischers, fest integriert ist. Die Integration der Austragsschneckenvorrichtung in den Enddeckel führt jedoch zu teuren Schmiedestücken bzw. zu aufwendig herzustellenden Schweisskonstruktionen.

Aus der DE 10 2004 014163 A1, die einen Reaktor/Mischer entsprechend dem Oberbegriff des Anspruchs 1 offenbart, ist weiterhin eine Vorrichtung zur Herstellung von Recyclat-Polyolen aus Polyestern bekannt. Diese umfasst einen horizontal angeordneten Reaktor, der in einem Reaktorinnenraum eine oder mehrere Hohlwellen, die horizontal, parallel und rotierbar gelagert sind, aufweist, wobei der Reaktorinnenraum in Stoffflussrichtung in eine Misch- und Lösezone, eine Reaktionszone und eine Nachreaktions- und Austragszone geteilt ist. Die Vorrichtung umfasst zudem ein mit einer Temperaturerfassung funktionell verbundenes Temperieraggregat, für einen Wärmeträgertransport in der oder die Hohlwellen und in Heizmantel (Misch- und Lösezone), Heizmantel (Reaktionszone) und Heizmantel (Nachreaktions- und Austragszone) sowie einen Antrieb der Hohlwellen, eine mit der Misch- und Lösezone verbundene Förder- und Dosiereinrichtung und eine mit der Nachreaktions- und Austragszone verbundene Austragseinheit.

US 8 177 414 B1 beschreibt eine verbesserte Schneckenförderer-Anordnung zur Herstellung einer Verbindung zwischen dem Auslass eines Vorkonditionierers und dem Einlass eines Extruderzylinders. Die Anordnung umfasst ein aufrechtes Gehäuse mit einem Paar von länglichen Wellen mit Förderschnecken darin, welche mittels eines Motors angetrieben werden. Vorzugsweise ist das Gehäuse mechanisch mit dem Auslass und Einlass gekoppelt, wobei sich die Wellen durch den Vorkonditionierbehälter erstrecken und nach unten bis zu einem Punkt innerhalb des Einlasses und dicht neben der/den Schnecke(n) in dem Extruderzylinder. Die Schnecke ist entlang der Länge des Gehäuses vorgesehen, von einem Punkt dicht neben dem Auslass und in den Extrudereinlass hinein. Auf diese Weise wird eine positive Beförderung von vorkonditioniertem Material vom Auslass zum Einlass erreicht. Die Verwendung dieser Anordnung ermöglicht eine Aufrechterhaltung von erhöhten Drücken und Temperaturen im Vorkonditionierer, was eine effizientere Verarbeitung ermöglicht.

Es ist daher die Aufgabe der vorliegenden Erfindung, einen zweiwelligen Reaktor/Mischer bereitzustellen, mit dem eine bessere Durchmischung durch eine entsprechende Verteilung der Strömungstörungen über den Reaktionsraum erfolgen kann, ohne dass dabei die Dauerfestigkeit des Reaktors/Mischers überschritten wird. In diesem Zusammenhang soll generell eine Prozessintensivierung erreicht werden und insbesondere auch eine verbesserte Abreinigungswirkung für die Gehäuseinnenwand.

Diese Aufgabe wird erfindungsgemäss gelöst durch einen Reaktor/Mischer, entsprechend Anspruch 1.

Mit Hilfe des erfindungsgemässen Reaktors/Mischers kann vor allem eine Intensivierung der Mischwirkung erreicht werden, was insbesondere bei Entgasungs- und Compoundier-Aufgaben zu einer Verkürzung der Verfahrenslänge und damit zu kleineren Maschinen führt. Aufgrund der durch die bei zweiwelligen Reaktoren stärker ausgeprägten Pfropfenströmung (bzw. Transportbewegung des Reaktionsguts) können vermittels der statischen Mischelemente deutlich stärkere Strömungsstörungen erzielt und so eine besonders vorteilhafte Oberflächenverteilung des Reaktionsguts erreicht werden, als es etwa mit einwelligen Reaktoren mit statischen Mischelementen vorstellbar wäre, wo letztere ggf. zu Abreinigungszwecken vorgesehen sein könnten. Zudem wird eine stärkere Entkopplung von Rotordrehzahl, axialer Förderung und Füllgrad erzielt, was eine bessere Betriebskontrolle und mehr Anpassungs-möglichkeiten gestattet. Im Übrigen wird eine Erhöhung und Anpassung der Dissipation in bestimmten Zonen des Reaktors/Mischers erzielt, was insbesondere beim Aufschmelzen vorteilhaft ist, da ein besserer Wärmeeintrag gewährleistet wird und dadurch letztlich die Effizienz beim Entgasen und Reagieren von zähviskosen Produkten erhöht wird.

Bei einem nicht erfindungsgemässen System aus einem Enddeckel für einen ein- oder mehrwelligen Reaktor/Mischer und einem mit dem Enddeckel auf lösbare Weise verbindbaren Austragsschneckenanschlussblock, weist der Enddeckel zumindest ein Lager zur Aufnahme von zumindest einem Wellenende, sowie mehrere Bohrungen zur Aufnahme von Befestigungsmitteln, und eine Mischgutauslassöffnung auf; und der Austragsschneckenanschlussblock weist zumindest einen Kanal zur Aufnahme von zumindest einer Austragsschnecke, sowie eine mit der Mischgutauslassöffnung des Enddeckels korrespondierende Mischguteinlassöffnung, welche in den zumindest einen Kanal mündet, und mehrere Bohrungen, welche jedenfalls teilweise mit den Bohrungen im Enddeckel korrespondieren, auf.

Mittels des nicht erfindungsgemässen Systems wird es ermöglicht, die Austragsschnecke(n) an das Gehäuse eines Reaktors/Mischers anzuschrauben. Das führt zu einer erheblichen Vereinfachung von Montage- und Demontage mit entsprechenden Kostenvorteilen. Das System kann mit allen bekannten grossvolumigen, ein- oder mehrwelligen Reaktoren/Mischern eingesetzt werden und gestattet daher eine grosse Flexibilität in der Anwendung.

Es wird angemerkt, dass die scheibenartigen Elemente üblicher Weise als im Querschnitt etwa ringförmige Scheibenelemente ausgestaltet sind. Die scheibenartigen Elemente können jedoch auch lückenartige Unterbrechungen zwischen den einzelnen Abstreifern aufweisen, so dass sich im Querschnitt etwa eine sternförmige Konfiguration ergibt. Es ist des Weiteren auch denkbar, dass die Abstreifer direkt auf der Welle angeordnet sind, wobei auch bei einer derartigen Ausgestaltung die unteren Anschlussbereiche der Abstreifer als scheibenartige Elemente im Sinne der vorliegenden Erfindung gelten.

In einer bevorzugten Ausführungsform des erfindungsgemässen Reaktors/Mischers werden die zumindest zwei Wellen mit jeweils gleicher Drehzahl vom Motor angetrieben. Auf diese Weise kann eine besonders gleichmässige Vermischung erreicht werden, bei gleichzeitig gleichmässiger Lastverteilung über die Gehäusewandung. Dies ist gerade im Hinblick auf die statischen Mischelemente von Bedeutung, die ja zusätzlich (zu den zwei sich überlappenden Wellen) Scherkräfte erzeugen und so grundsätzlich zu einer höheren Beanspruchung der Gehäusewand beitragen. Es schien daher unzweckmässig, statische Mischelemente überhaupt in zweiwelligen Reaktoren/Mischern einzusetzen.

Weiter vorzugweise werden die Wellen gleichsinnig angetrieben. Gleichsinnig drehende Wellen entgasen in der Regel besser als gegensinnig drehende Wellen, da hier ein Film geschaffen wird, wenn das Reaktionsgut von einer Welle auf die andere geschaufelt wird. Bevorzugt sind darüber hinaus die Wellen horizontal im Reaktorgehäuse gelagert.

In einer anderen bevorzugten Ausführungsform des erfindungsgemässen Reaktors/Mischers weist der Reaktionsraum im Querschnitt in etwa die Form einer liegenden Acht mit einem Mittelpunkt P auf, durch welchen eine horizontale Achse E und eine vertikale Achse F verlaufen. Diese Geometrie hat sich bei der verfahrenstechnischen Behandlung von elastischem, hochviskosem und feststoffhaltigem Reaktions- und Mischgut als besonders effizient und stabil erwiesen. Durch den Mittelpunkt P verläuft entsprechend auch die Längsachse des Reaktionsraums. Es hat sich herausgestellt, dass bei einer rein ovalen Form des Reaktionsraums eine ungenügende Vermischung oberhalb und unterhalb des Überlappungsbereichs der Wellen auftreten kann.

Gemäss einer noch weiteren bevorzugten Ausführungsform des erfindungsgemässen Reaktors/Mischers sind die statischen Mischelemente, ausgehend vom Mittelpunkt P in einem Winkelbereich α von etwa 180°, vorzugsweise etwa 150° und besonders bevorzugt etwa 120° im unteren Bereich der Gehäuseinnenwand angeordnet. Auf diese Weise kann insbesondere im unteren Bereich des Reaktors/Mischers, d.h. im gefüllten Teil des Reaktionsraums, eine besonders effektive verfahrens-technische Intensivierung des Misch- bzw. Austauschverhältnisses erreicht werden. Grundsätzlich ist es aber auch möglich, die Mischelemente über den gesamten Umfang des Reaktors/Mischers zu verteilen. Da hochviskose Medien im Gegensatz zu niederviskosen nicht unten liegen bleiben (Badewanneneffekt), sondern von den Rotoren über den ganzen Umfang des Reaktors/Mischers verteilt werden, ist eine entsprechende Anordnung für viele Anwendungen sinnvoll. Die vorstehend angegebenen Winkelbereiche sind insbesondere für zweiwellige Reaktoren/Mischer mit der vorstehend beschriebenen Querschnittsform geeignet, da hier das grösste Potenzial für eine Prozessintensivierung liegt.

Gemäss einer anderen bevorzugten Ausführungsform des erfindungsgemässen Reaktors/Mischers sind die statischen Mischelemente in gleichmässigen umfänglichen Abständen an der Gehäuseinnenwand angeordnet. Besonders bevorzugt sind hierbei Abstände von 45° und noch weiter bevorzugt von 30°. Sind die statischen Mischelemente etwa in einem Winkelbereich α von 180° angeordnet, so sind im linken wie im rechten Teil der liegenden Acht jeweils drei bzw. vier statische Mischelemente angeordnet, wobei die untersten statischen Mischelemente jeweils parallel zur vertikalen Achse F ausgerichtet sind. Die jeweils seitlich äussersten statischen Mischelemente sind bevorzugt entlang der horizontalen Achse F ausgerichtet.

In einer nochmals anderen bevorzugten Ausführungsform des erfindungsgemässen Reaktors/Mischers sind die statischen Mischelemente in Längsrichtung jeweils in einer Reihe miteinander fluchtend angeordnet. Auf diese Weise kann eine besonders gute Betriebskontrolle gewährleistet werden. Allerdings können die statischen Mischelemente auch nur im Bereich von besonders kritischen Zonen angeordnet sein, wie beispielsweise bei sehr hohen Viskositäten, kurz vor einem Phasenumbruch oder aber nach dem Einmischen von zusätzlichen Komponenten wie z.B. Reaktanten, Additiven etc. Regelmässig sind die statischen Mischelemente allerdings über die gesamte Länge des Reaktors/Mischers angeordnet. Hierdurch kann die Gesamteffizienz des Mischvorgangs gesteigert werden.

In einer weiteren Ausführungsform des Reaktors/Mischers sind die statischen Mischelemente als rautenförmige Stäbe ausgebildet. Es sind allerdings auch runde Stäbe oder aber T-förmige statische Mischelemente (mit etwa rundem oder rautenförmigem Querschnitt) denkbar. Im Falle von stabförmigen statischen Mischelementen ragen diese etwa soweit in das Innere des Reaktionsraums hinein, dass sie bündig mit der Unterseite der regelmässig T-förmigen Mischelemente auf den Wellen bzw. Scheiben abschliessen. Im Falle von T-förmigen, statischen Mischelementen greifen die T-Balken der statischen Mischelemente gerade hinter die T-Balken der Mischelemente auf den Wellen bzw. Scheiben. Auf diese Weise werden möglichst kleine Abstände erzielt zwischen den statischen Mischelementen und den (dynamischen) Mischelementen untereinander sowie auch gegenüber der Gehäuseinnenwand. Die auf diese Weise erzeugten Scherkräfte verbessern die Abreinigungswirkung gegenüber der Gehäusewand und darüber hinaus auch die gegenseitige Abreinigungswirkung. Die genaue geometrische Ausgestaltung der statischen Mischelemente hängt allerdings jeweils von den zu mischenden Gütern bzw. Produkten sowie den entsprechenden Drücken und Temperaturen ab. Pro Mischreihe in Längsrichtung oder innerhalb einer Mischreihe können die statischen Mischelemente unterschiedlich ausgeführt sein. Sie können allerdings auch abschnittweise weggelassen werden.

In einer wiederum anderen bevorzugten Ausführungsform des erfindungsgemässen Reaktors/Mischers weisen die statischen Mischelemente eine oder mehrere Bohrungen auf. Durch diese Bohrungen können beispielsweise flüssige Additive, Katalysatoren oder andere leicht-fliessende Zuschlagsstoffe direkt in das Mischgut eindosiert werden. Vorzugsweise sind die eine oder die mehreren Bohrungen mit Messvorrichtungen versehen. Die Messvorrichtungen können dabei Messelemente für Temperatur, Druck, Konzentrationen etc. umfassen.

In einer weiteren bevorzugten Ausführungsform des erfindungsgemässen Reaktors/Mischers sind die statischen Mischelemente jeweils durch eine Öffnung in der Gehäusewand in den Reaktor/Mischer eingebracht und mittels einer Druckarmatur - d.h. insbesondere einer lösbaren Verschraubung - am Gehäuse befestigt. Auf diese Weise kann eine besonders hohe Stabilität des gesamten Reaktors/Mischers gewährleistet werden.

In einer nochmals anderen bevorzugten Ausführungsform des erfindungsgemässen Reaktors/Mischers weist der Reaktor/Mischer ein jedenfalls teilweise offenes Gehäuse auf. Auch dies ist regelmässig abhängig von den Druck- und/oder Temperaturbedingungen, die bei der Vermischung von den jeweiligen Reaktions- /Mischgütern herrschen.

In einer weiteren bevorzugten Ausführungsform des erfindungsgemässen Reaktors/Mischers weist der Reaktor/Mischer einen grossvolumigen Brüdensammelraum oberhalb des jedenfalls teilweise offenen Gehäuses auf. Eine derartige Ausgestaltung kann insbesondere zur Bereitstellung eines tiefen Drucks oder hohen Vakuums an der Produktoberfläche dienen. Weiter vorzugsweise ist dabei in dem grossvolumigen Brüdensammelraum ein Ablenkblech angeordnet. Das Ablenkblech soll den entstehenden Dampf in Richtung des Brüdenauslasses leiten. Des Weiteren soll es die Bildung von Ablagerungen im unteren Bereich des Brüdensammelraums verhindern, welcher an die Reaktorwandung angrenzt. Bevorzugt ist das Brüdensammelraumgehäuse, inklusive Verbindungsflansch und Brüdenauslass, beheizbar, um Kondensation zu verhindern.

In einer bevorzugten Ausführungsform des nicht erfindungsgemässen Systems ist an dem Austragsschneckenanschlussblock ein Antrieb für die eine oder die mehreren Austragsschnecken auf lösbare Weise anordenbar. Hierzu weist der Austragsschneckenanschlussblock in der Regel einen Anschlussflansch mit mehreren umfänglichen Bohrungen auf, an den der Antrieb bzw. der Motor für die zumindest eine Austragsschnecke angeschraubt werden kann. Hierdurch wird ein besonders günstiger modularer Aufbau dieser Komponenten bereitgestellt.

In einer wiederum anderen bevorzugten Ausführungsform des nicht erfindungsgemässen Systems weist der Austragsschnecken-anschlussblock in der Umgebung der Mischguteinlassöffnung ein beschlagartiges Befestigungsstück auf. Dieses beschlagartige Befestigungsstück dient grundsätzlich der Befestigung des Austragsschneckenanschlussblocks am Enddeckel, welcher wiederum am Gehäuse des jeweiligen Reaktors/Mischers verschraubt wird.

In einer noch weiteren bevorzugten Ausführungsform des nicht erfindungsgemässen Systems weist das beschlagartige Befestigungsstück einen inneren Rahmenbereich auf, welcher die Mischguteinlassöffnung des Austragsschneckenanschlussblocks umschliesst und in welchen Öffnungen zur Aufnahme von Befestigungsmitteln eingebracht sind, mit denen der Enddeckel an dem Austragsschneckenanschlussblock befestigbar ist. Auf diese Weise kann eine besonders gute Abdichtung im Bereich der Mischguteinlassöffnung erzielt werden.

In einer nochmals anderen bevorzugten Ausführungsform des nicht erfindungsgemässen Systems weist das beschlagartige Befestigungsstück einen äusseren Rahmenbereich auf, in welchen Öffnungen zur Aufnahme von Befestigungsmitteln eingebracht sind, mit denen der Austragsschneckenanschlussblock am Enddeckel befestigbar ist. Hierdurch kann eine optimale wechselseitige Befestigung des Austragsschneckenanschlussblocks am Enddeckel gewährleistet werden.

In einer weiteren bevorzugten Ausführungsform des nicht erfindungsgemässen Systems weist der äussere Rahmenbereich zudem seitlich offene Bohrungen auf, welche mit entsprechenden Sacklochbohrungen in der dem Austragsschneckenanschlussblock zugewandten Enddeckelaussenseite fluchten. Weiter bevorzugt sind dabei Abdichtbolzen in die Sacklochbohrungen in der Enddeckelaussenseite einbringbar. Diese Ausgestaltung schafft die Grundlage für eine besonders gut abgedichtete Montage.

In einer noch weiteren bevorzugten Ausführungsform des nicht erfindungsgemässen Systems ist in der dem Austragsschneckenanschlussblock abgewandten Innenseite des Enddeckels eine Vertiefung eingebracht, welche im Wesentlichen mit dem inneren Rahmenbereich des beschlagartigen Befestigungsstückes korrespondiert. In diese Vertiefung wird bevorzugt eine Blende eingesetzt. Die Blende überdeckt dabei die Köpfe der Befestigungsmittel, welche durch entsprechende Öffnungen in der Vertiefung durch den Enddeckel hindurch in die korrespondierenden Öffnungen im inneren Rahmenbereich des beschlagartigen Befestigungsstückes eingebracht sind.

In einer wiederum anderen bevorzugten, nicht erfindungsgemässen, Ausführungsform wird die Blende vermittels Bolzenschrauben, welche in den Sacklochbohrungen in der Enddeckelaussenseite mit einer entsprechenden Mutter verschraubt werden, in der Vertiefung in der Enddeckel-Innenseite eingezogen, so dass eine besonders effektive Abdichtung gegenüber dem Reaktorinnenraum erfolgt.

In einer noch anderen bevorzugten, nicht erfindungsgemässen, Ausführungsform weist die Blende eine Öffnung auf, welche kleiner ist als die Mischguteinlassöffnung des Austragsschneckenanschlussblocks. Auf diese Weise wird eine Vergrösserung des Strömungsquerschnitts in Strömungsrichtung erzeugt, der eine bessere Weiterförderung des Mischguts durch die eine oder mehreren Austragsschnecken ermöglicht.

Das System kann für alle Arten von ein- oder mehrwelligen Reaktoren/Mischern eingesetzt werden. Bevorzugt wird es im Zusammenhang mit dem erfindungsgemässen Reaktor/Mischer eingesetzt.

Ein erfindungsgemässer Reaktor/Mischer sowie ein System werden anhand der beigefügten Zeichnungen beispielhaft dargestellt. Es zeigen:
- Fig. 1: eine perspektivische Ansicht eines erfindungsgemässen Reaktors/Mischers ohne Wellen;
- Fig. 2: eine schematische Seitenansicht eines erfindungsgemässen Reaktors/Mischers mit anschliessender Austragsschnecke (ohne weitere Gehäusekomponenten);
- Fig. 3: eine Draufsicht auf einen erfindungsgemässen Reaktor/Mischer sowie auf eine Austragsschnecke gemäss Fig. 2;
- Fig. 4: eine Querschnittsansicht durch den Reaktorraum und die Wellen eines Reaktors/Mischers;
- Fig. 5: eine perspektivische Ansicht eines Austragsschnecken-anschlussblocks;
- Fig. 6: eine Innenansicht eines Systems aus Enddeckel und Austragsschnecken-anschlussblock;
- Fig. 7: eine Aussenansicht eines Systems aus Enddeckel und Austragsschnecken-anschlussblock;
- Fig. 8: eine teilweise Draufsicht auf einen Querschnitt entlang der Linie I - I in Fig. 6;
- Fig. 9: eine teilweise Draufsicht auf einen Querschnitt entlang der Linie II - II in Fig. 7.

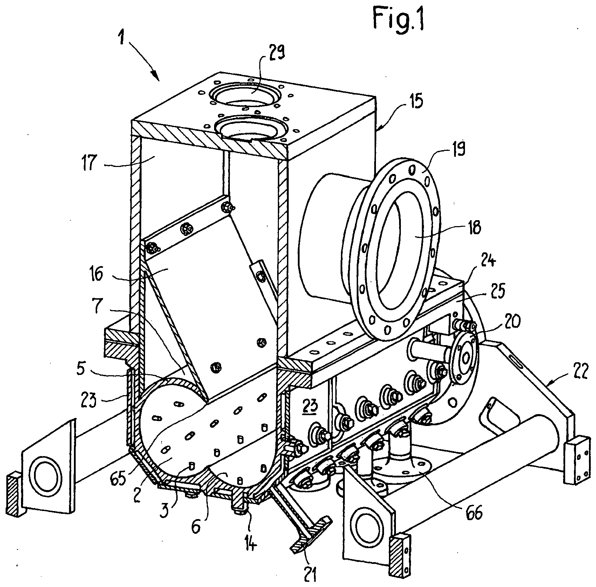

In **Fig. 1** wird der erfindungsgemässe Reaktor/Mischer 1 in perspektivischer Ansicht dargestellt. In der gezeigten Ausführungsform weist das Gehäuse 5 des Reaktors/Mischers 1 einen dieses zumindest teilweise umgebenden Heizmantel 23 auf. Der Heizmantel 23 verfügt über einen Heizmitteleinlass 20 und einen Heizmittelauslass 21. Die statischen Mischelemente 3 sind hier vermittels von Druckarmaturen 14 an der Aussenseite des Heizmantels 23 befestigt und ragen durch entsprechende Öffnungen in der Wandung des Gehäuses 5 in den Reaktionsraum 2 hinein. Es sind allerdings auch Ausführungsformen des erfindungsgemässen Reaktors/Mischers 1 ohne Heizmantel 23 denkbar. Der erfindungsgemässe Reaktor/Mischer 1 ist in einem Reaktorgestell 22 gelagert und vermittels einem flanschartigen Vorsprung 25 mit einem Brüdensammelraumgehäuse 15 verbunden (d.h. insbesondere verschraubt oder verschweisst), welches diesbezüglich über einen korrespondierenden flanschartigen Vorsprung 24 verfügt. Das Brüdensammelraumgehäuse 15 weist an seiner Oberseite zwei Öffnungen 29 auf, die als Sichtfenster oder aber als Anschluss für weitere Komponenten dienen können. Innerhalb des Brüdensammelraums 17 ist ein schräg angeordnetes Ablenkblech 16 montiert. Dieses Ablenkblech 16 soll etwa beim Misch- bzw. Aufschmelzvorgang entstehenden Dampf in Richtung des Brüdenauslasses 18 leiten und verhindern, dass sich Ablagerungen auf der darunterliegenden Gehäuseaussenwand 7 bilden. Das Ablenkblech 16 ist insbesondere mit einer Seitenwand des Brüdensammelraumgehäuses 15 verschraubt. In dieser Ausführungsform ist der Reaktionsraum 2 offen gestaltet, wobei das Ablenkblech 16 an der Öffnungskante 65 des Reaktionsraums 2 anliegt. Der Reaktionsraum 2 weist in der vorliegenden Ausführungsform im Querschnitt die Form einer liegenden Acht auf, wobei vorliegend die rechte obere Hälfte der liegenden Acht offen ist. Der Reaktor/Mischer 1 wird ggf. mit Hilfe von Stützen 66 zusätzlich gegenüber dem Boden abgestützt.

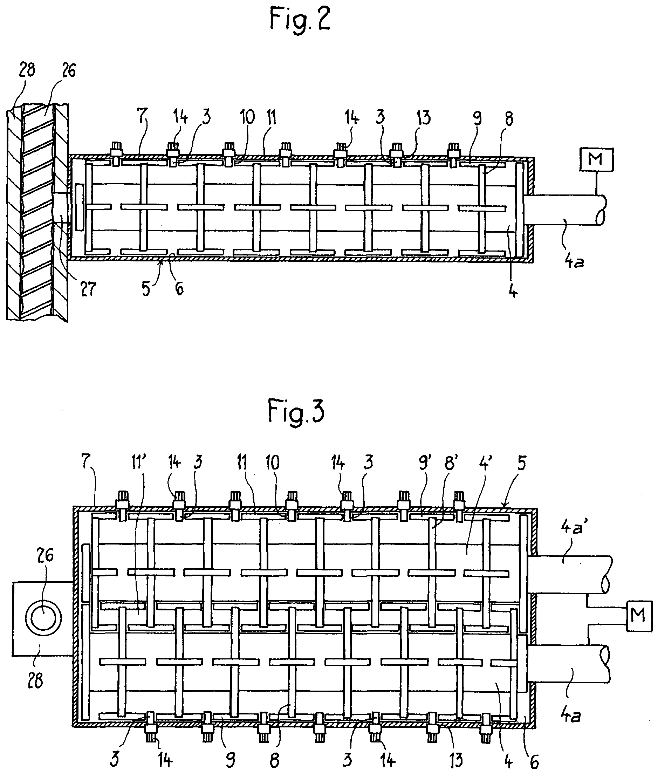

**Fig. 2** zeigt eine schematische Seitenansicht einer Ausführungsform eines erfindungsgemässen Reaktors/Mischers 1 ohne Brüdensammelraumgehäuse, Reaktorgestell und Heizmantel. Wie zu sehen, sind in dieser Ausführungsform der Erfindung die statischen Mischelemente 3 durch Öffnungen 13 in der Gehäusewand 5 in den Reaktionsraum 2 eingebracht und mit Hilfe von Druckarmaturen 14 an der Gehäuseaussenwand 7 befestigt. Der Reaktionsraum 2 ist über die Mischguteinlassöffnung 27 eines Austragsschneckengehäuses 28 in Fluidkommunikation mit der Austragsschnecke 26. Die Welle 4 bzw. das Wellenende 4a wird vermittels des Motors M (Getriebe nicht gezeigt) angetrieben. Auf der Welle 4 sitzen die scheibenartigen Elemente 8. Auf den scheibenartigen Elementen 8 sind wiederum die Abstreifer 9 angeordnet, welche erfindungsgemäss eine T-förmige Ausgestaltung aufweisen. Die T-förmig ausgestalteten Abstreifer 9 greifen jeweils zwischen zwei von den stabförmigen statischen Mischelementen 3, wobei jeweils relativ kleine Zwischenräume gebildet werden zwischen der Oberseite des T-förmigen Abstreifers 9 und der Gehäuseinnenwand 6 sowie zwischen den Seitenkanten des T-Balkens des T-förmigen Abstreifers 9 und den statischen Mischelementen 3. Die Anordnung ist dabei so gewählt, dass die Unterkante des T-Balkens in etwa mit der in den Reaktionsraum 2 hineinragenden Stirnseiten der benachbarten statischen Mischelemente 3 fluchtet. Auf diese Weise werden insbesondere in den Zwischenräumen 10, 11 verstärkt Scherkräfte erzeugt, welche bei der Selbstreinigung des Reaktors/Mischers 1 behilflich sind und mithilfe derer insbesondere Ablagerungen bzw. Krustenbildungen an der Gehäuseinnenwand 6 auf effektive Weise unterbunden werden.

**Fig. 3** zeigt eine schematische Draufsicht auf einen erfindungsgemässen Reaktor/Mischer 1 gemäss **Fig. 2****.** Die beiden parallel zueinander angeordneten Wellen 4, 4' weisen wiederum jeweils axial zueinander versetzte, scheibenartige Elemente 8, 8' auf, auf denen wiederum jeweils Abstreifer 9, 9' angeordnet sind, die eine T-förmige Ausgestaltung aufweisen. Die Wellen 4, 4' bzw. die Wellenenden 4a, 4a' werden vom Motor M (Getriebe nicht gezeigt) angetrieben. Es sind allerdings auch Ausführungsformen denkbar, in denen jede Welle 4, 4' bzw. jedes Wellenende 4a, 4a' von einem separaten Motor angetrieben wird. Am auslassseitigen Ende des Reaktors/Mischers 1 erkennt man das Austragsschneckengehäuse 28 mit der Austragsschnecke 26. Die Austragsschnecke 26 kann im Übrigen auch in Form einer Austragsdoppelschnecke ausgestaltet sein. Die statischen Mischelemente 3 sind wieder durch Öffnungen 13 im Gehäuse 5 in das Innere des Reaktionsraums 2 eingebracht und bezüglich der Abstreifer 9, 9' wiederum so angeordnet wie unter **Fig. 2** beschrieben. Im Überlappungsbereich der Abstreifer 9, 9' greifen diese aufgrund ihrer axial versetzten Anordnung hintereinander, wobei die Zwischenräume 11' zwischen den horizontalen T-Balken im Überlappungsbereich in der Regel grösser sind, als die Zwischenräume 10, 11 zwischen den T-förmigen Balken der Abstreifer 9, 9' und der Gehäuseinnenwand 6 bzw. den statischen Mischelemente 3. Die statischen Mischelemente 3 sind wiederum vermittels von Druckarmaturen 14 an der Gehäuseaussenwand 7 befestigt. Die scheibenartigen Elemente 8, 8' können senkrecht relativ zu den Wellen 4, 4' angeordnet sein. Sie können allerdings auch am Umfang versetzt gegenüber den Wellen 4, 4' angeordnet sein, wobei sich die Schiefstellung in Längsrichtung der Wellen 4, 4' verstärken oder vermindern kann. In ähnlicher Weise können die Abstreifer 9, 9', in Längsrichtung gesehen, eine ggf. zunehmende Schrägstellung gegenüber der Welle 4, 4' einnehmen, so dass sie einen schiefen bzw. verzogenen Verlauf aufweisen. In der Regel sind die T-Balken der Abstreifer 9, 9' fluchtend miteinander ausgerichtet; sie können allerdings auch in Umfangsrichtung versetzt zueinander angeordnet sein.

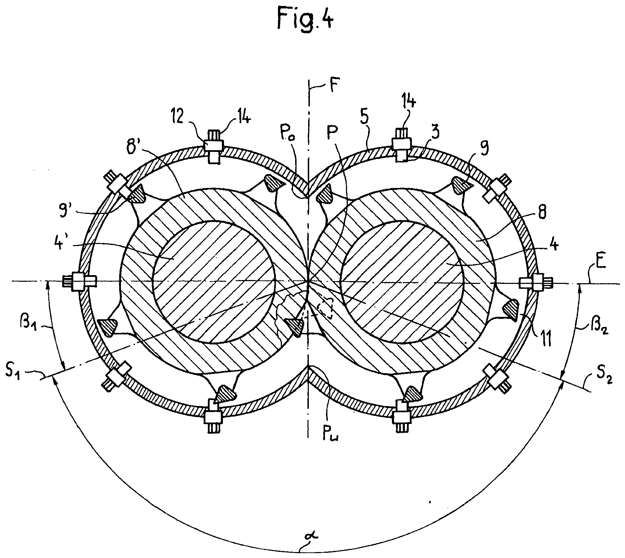

In **Fig. 4** wird eine schematische Querschnittsansicht durch den Reaktorraum 2 bzw. ein Gehäuse 5 eines Reaktors/Mischers 1 veranschaulicht. Das Gehäuse 15 bzw. der Reaktorraum 2 weisen im Wesentlichen die Form einer liegenden Acht auf. Durch den oberen Punkt PO der Einschnürung und den unteren Punkt PU der Einschnürung verläuft die vertikale Achse F, welche von der horizontalen Achse E im Mittelpunkt P geschnitten wird. Der Mittelpunkt P liegt somit auf der Längsachse des Gehäuses 5. Auf den parallel zueinander angeordneten Wellen 4, 4' sitzen die scheibenartigen Elemente 8, 8' angeordnet, auf welchen die Abstreifer 9, 9' angeordnet sind. Im Überlappungsbereich, d.h. etwa im Bereich zwischen den Punkten PO und PU hintergreifen sich die Abstreifer 9 und 9' der Wellen 4 und 4'. Am Umfang des Gehäuses 5 sind die statischen Mischelemente 3 angeordnet. Diese können, wie gezeigt, Bohrungen 12 aufweisen, durch welche Zusatzstoffe bzw. Additive in den Reaktionsraum 2 eingebracht werden können. Durch die Bohrungen 12 können alternativ oder zusätzlich auch Messinstrumente in den Reaktionsraum 2 eingeführt werden. Die statischen Mischelemente 3 sind wiederum vermittels von Druckarmaturen 14 gegenüber dem Gehäuse 5 befestigt. Bevorzugt sind die statischen Mischelemente 3 in der unteren Hälfte des Gehäuses 5 angeordnet, wobei ein Winkelbereich α von 180°, vorzugsweise 150° und weiter bevorzugt von 120° vorgesehen ist. Der Winkelbereich α wird dabei gebildet zwischen den beiden Schenkeln S1 und S2, welche sich im Mittelpunkt P schneiden. Die Winkelbereich β1 und β2 zwischen den Schenkeln S1 und S2 und der horizontalen Achse E sind dabei vorzugsweise gleich gross (bei einem Winkelbereich α von 180° fallen die Schenkel S1 und S2 mit der horizontalen Ebene E zusammen). In den vorgenannten Winkelbereichen α (d.h. im üblicherweise gefüllten Raum der Prozesszone) kann durch die Anordnung von statischen Mischelementen 3 eine besonders starke Prozessintensivierung erzielt werden. Die untersten statischen Mischelemente 3 sind dabei vorzugsweise parallel zur vertikalen Achse F angeordnet. Weiter vorzugsweise sind die beiden seitlich äussersten statischen Mischelemente 3 entlang der horizontalen Achse E ausgerichtet, d.h. senkrecht zur vertikalen Achse F. Zwischen dem jeweils äussersten und dem untersten statischen Mischelement 3 sind vorzugsweise ein oder zwei weitere statische Mischelemente 3 angeordnet. Dies hat sich in der Praxis als besonders effektiv bei der Vermeidung von Zonen mit unzulänglicher Vermischung erwiesen. Für manche Anwendungen, insbesondere bei hochviskosen Medien, kann es allerdings sinnvoll sein, die statischen Mischelemente 3 über die gesamte Gehäuseinnenwand des Reaktors/Mischers 1 zu verteilen, da hier die Wellen 4, 4' mit den Abstreifern 9. 9' das Medium über den ganzen Umfang des Reaktionsraums 2 verteilen.

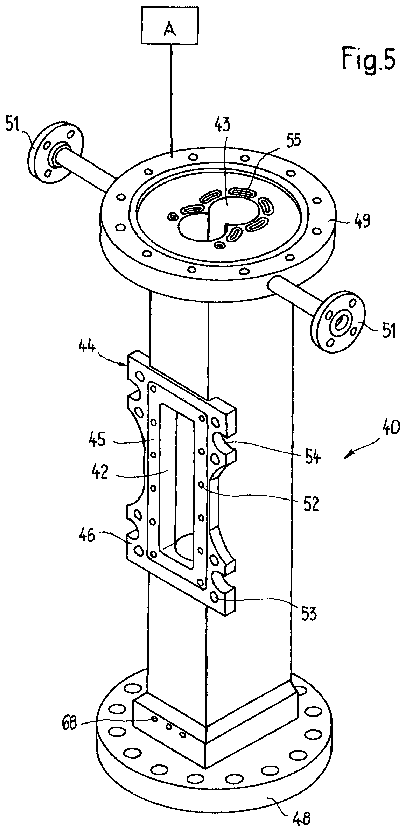

In **Fig. 5** wird ein Austragsschnecken-anschlussblock 40 dargestellt. Durch den Austrags-schneckenanschlussblock 40 hindurch verläuft ein Kanal in Form einer Tieflochbohrung, welcher vorliegend zur Aufnahme einer Doppelaustragsschnecke ausgebildet ist. Am oberen Ende des Austragsschneckenanschlussblocks 40 ist ein flanschartiges Verbindungsstück 49 angeordnet. An diesem wird üblicherweise ein Antrieb für die Austragsschnecke bzw. Austragsdoppelschnecke fest-geschraubt. In die Seitenwand des flanschartigen Verbindungsstücks 49 münden Anschlüsse 51 für eine Kühl- bzw. Wärmetauschflüssigkeit, welche in den Röhren 55 strömt, die durch den Austragsschneckenanschlussblock 40 hindurch verlaufen. Am unteren Ende des Austragsschnecken-anschlussblocks 40 sind Eintritts- und Austrittsöffnungen 68 vorhanden, welche mit den Röhren 55 in Fluidkommunikation stehen. Unterhalb der Eintritts- und Austrittsöffnungen 68 ist ein unteres flanschartiges Verbindungsstück 48 angeordnet. Etwa in der Mitte des Austragsschneckenanschlussblocks 40 ist ein beschlagartiges Befestigungsstück 44 angeordnet, welches der Verbindung mit dem Enddeckel eines Reaktors/Mischers dient. Das beschlagartige Befestigungsstück 44 weist einen äusseren Rahmenbereich 46 auf, in welchen vorliegend acht Bohrungen für Schrauben eingebracht sind, mittels derer der Austragsschneckenanschlussblock 40 an dem Enddeckel des Reaktors/Mischers festgeschraubt werden kann. Des Weiteren sind in den äusseren Rahmenbereich 46 des beschlagartigen Befestigungsstücks 44 vier seitlich offene Bohrungen 54 eingebracht. Durch diese hindurch kann, was weiter unten detailliert erläutert wird, eine Schraubenmutter sowie ein Abdichtbolzen in eine entsprechende Sacklochbohrung des Enddeckels eingebracht werden. Das beschlagartige Befestigungsstück 44 weist des Weiteren einen inneren Rahmenbereich 45 auf, welcher eine Mischguteinlassöffnung 42 des Austragsschneckenanschlussblocks 40 umschliesst bzw. umgibt. Durch die Mischguteinlassöffnung 42 tritt das Mischgut hindurch und in den Kanal 43 mit der Austragsdoppelschnecke hinein. Bei der Förderung des Mischguts durch die Austragsdoppelschnecke entsteht wiederum Wärme, welche vermittels der in den Röhren 55 strömenden Wärmetauschflüssigkeit genutzt werden kann.

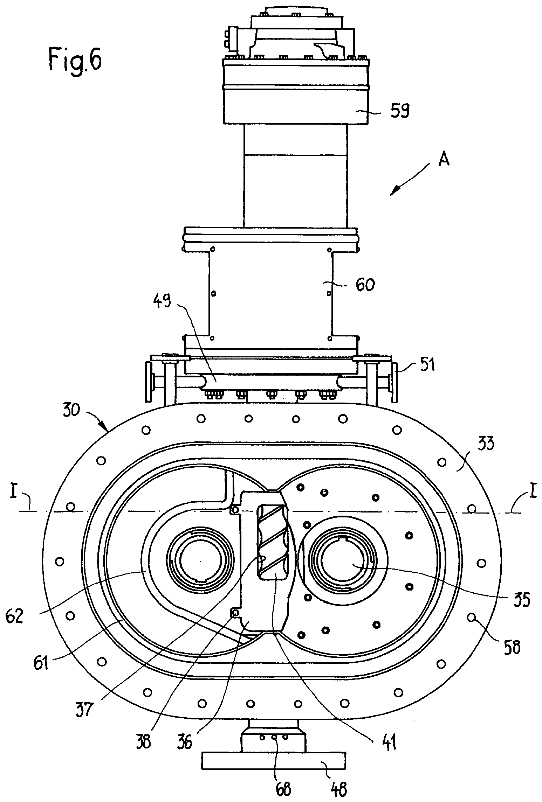

**Fig. 6** illustriert eine Innenansicht eines Systems aus Enddeckel und Austragsschneckenanschlussblock - d.h. vom Reaktionsraum des Reaktors/Mischers aus gesehen. Der Antrieb A mit dem Motor 59 und dem Getriebe 60 ist auf dem flanschartigen Verbindungsstück 49 angeordnet bzw. verschraubt. Der Enddeckel 30 weist umfängliche Bohrungen 58 auf, welche zur Aufnahme von Schrauben dienen, mit denen der Enddeckel 30 am Reaktor/Mischer befestigbar ist. Die Austragsdoppelschnecke 41 verläuft hinter der Schnittebene senkrecht zwischen den beiden Lagern 35 für die Wellenenden hindurch. Zwischen den beiden Lagern 35 ist eine Blende 36 mit einer Öffnung 37 angeordnet, durch welche das Mischgut durch den Enddeckel hindurch in die Mischguteinlassöffnung des Austragsschneckenanschlussblocks eintreten kann. Die Öffnung 37 der Blende 36 ist dabei kleiner als die Mischguteinlassöffnung 42 des Austragsschneckenanschlussblocks 40. Durch diese Querschnittserweiterung kann eine besonders günstige Anströmung der Austragsdoppelschnecke 41 erreicht werden. Im Bereich des einer liegenden Acht entsprechenden Anschlussbereichs der Enddeckelinnenseite 33 sind Dichtmittel 61, 62 vorgesehen. Die Blende 36 ist vermittels von Bolzenschrauben 38 mit dem Austragsschneckenanschlussblock 40 verschraubt, was weiter unten detailliert erläutert wird. Am unteren Ende des Austragsschneckenanschlussblocks erkennt man wiederum das flanschartige Verbindungsstück 48 sowie die Eintritts- und Austrittsöffnungen 68.

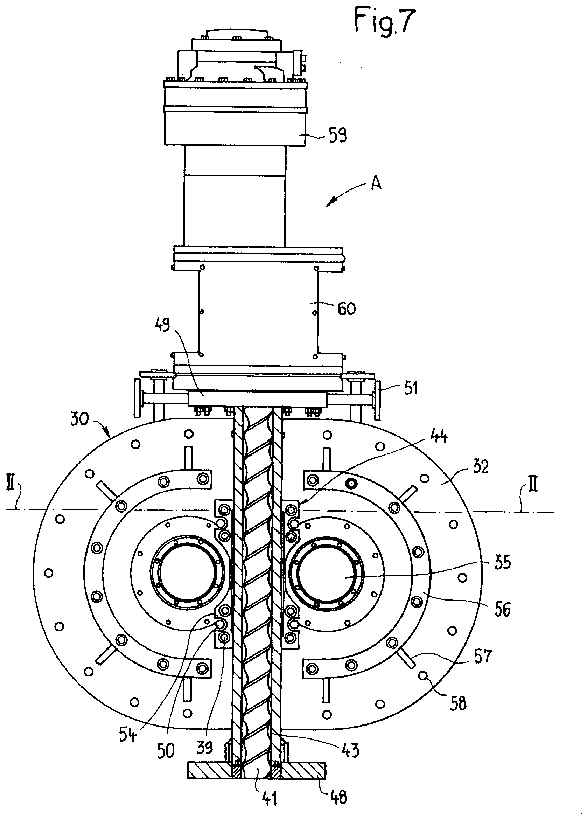

Eine Aussenansicht des Systems aus Enddeckel 30 und Austragsschneckenanschlussblock 40 wird in **Fig. 7** dargestellt. Auf der Aussenseite 32 des Enddeckels 30 sind zwei hufeisenförmige Vorsprünge 56 zur Befestigung des Lagergehäuses der Wellen 4, 4' angeordnet, welche über Streben 57 mit dem Enddeckel 30 verbunden sind. Der Austragsschneckenanschlussblock 40 mit der Austragsdoppelschnecke 41 bzw. dem Kanal 43 erstreckt sich senkrecht zwischen den beiden Lagern 35 für die Wellenenden hindurch. Der Austragsschneckenanschlussblock 40 ist über das beschlagartige Befestigungsstück 44 und die Schrauben 39 mit dem Enddeckel 30 verschraubt. In den seitlich offenen Bohrungen 54 sind jeweils Abdichtbolzen 50 angeordnet.

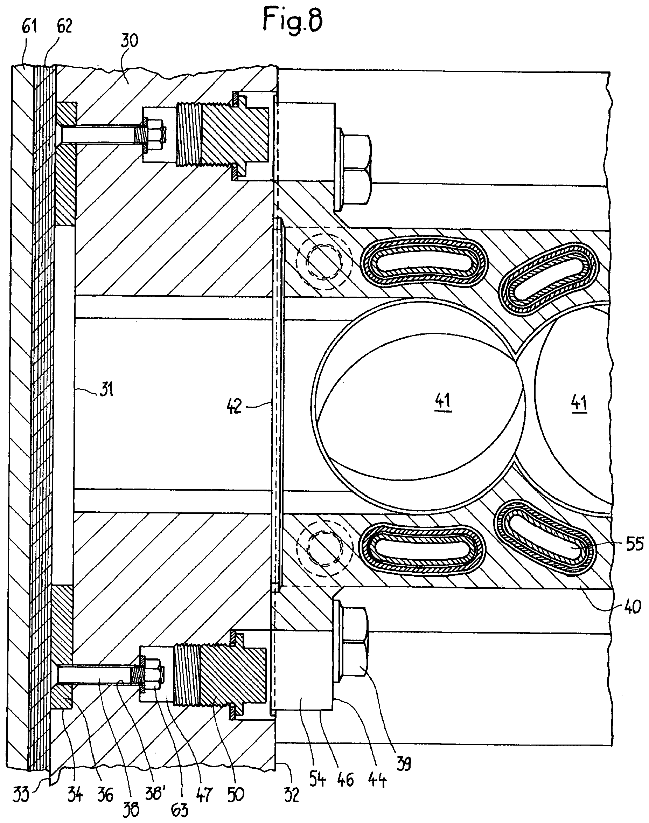

**Fig. 8** zeigt eine teilweise Draufsicht auf einen Querschnitt durch das System entlang der Linie I-I in **Fig. 6****.** Der Enddeckel 30 ist zwischen dem Austragsschneckenanschlussblock 40 und der in die Vertiefung 34 der Enddeckelinnenseite 33 eingelassenen Blende 36 angeordnet. Die Blende 36 ist dabei über die Bolzenschrauben 38 (und Bohrungen 38') mit korrespondierenden Schraubenmuttern 63 verschraubt, welche in Sacklochbohrungen 47 in der Enddeckelaussenseite 32 eingebracht sind, die wiederum vermittels von Abdichtbolzen 50 verschlossen sind. Die Mutter 63 und die Abdichtbolzen 50 werden durch die seitlich offenen Bohrungen 54 des äusseren Rahmenbereichs 46 des beschlagartigen Befestigungsstücks 44 hindurch eingebracht bzw. montiert. Man erkennt weiterhin die Schrauben 39, mit denen der Austragsschneckenanschlussblock 40 am Enddeckel verschraubt ist sowie die Austragsdoppelschnecke 41 und die Dichtmittel 61, 62. Seitlich angrenzend an die Austragsdoppelschnecke 41 sind die Röhren 55 angeordnet.

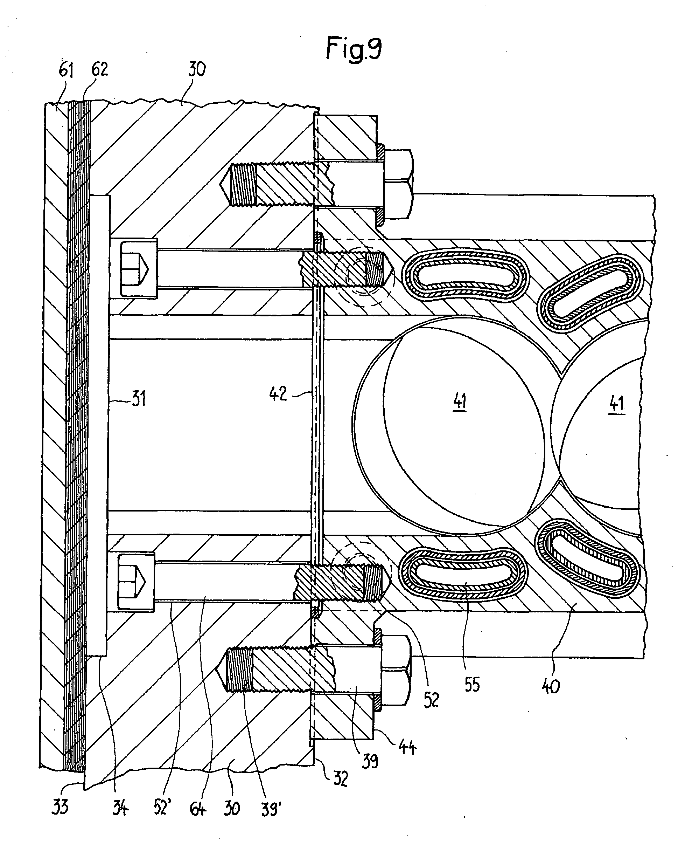

In **Fig. 9** wird eine teilweise Draufsicht auf einen Querschitt entlang der Linie II-II in **Fig. 7** dargestellt. Hier erkennt man insbesondere die Vertiefung 34 in der Innenseite 33 des Enddeckels 30 (ohne eingebrachte Blende 36). Man erkennt die Inbusschrauben 64, welche in die Bohrungen 52' eingebracht wurden, die um die Mischgutauslassöffnung 31 des Enddeckels 30 herum angeordnet sind und welche mit den Bohrungen 52 im inneren Rahmenbereich 45 des beschlagartigen Befestigungsstücks 44 korrespondieren. Die die Inbusschrauben 64 werden später von der Blende 36 verdeckt, welche fest in die Vertiefung 34 eingezogen wird (siehe oben). Es findet daher eine Verschraubung mit dem inneren Rahmenbereich 45 des Austragsschneckenanschlussblocks 40 statt. Von der anderen Seite her ist der Austragsschneckenanschlussblock 40 vermittels der Schrauben 39 mit dem Enddeckel 30 verschraubt, welcher entsprechende Bohrungen 39' an seiner Aussenseite 32 aufweist.

Das System bzw. der Austrags-schneckenanschlussblock wird bevorzugt zusammen mit einem erfindungsgemässen Reaktor/Mischer verwendet.

### Bezugszeichenliste:

- 1: Reaktor/Mischer
- 2: Reaktionsraum
- 3: statische Mischelemente
- 4, 4': Wellen
- 4a, 4a': Wellenenden
- 5: Gehäuse
- 6: Gehäuseinnenwand
- 7: Gehäuseaussenwand
- 8, 8': Scheibenartige Elemente
- 9, 9': Abstreifer
- 10: Zwischenräume (Abstreifer/statische Mischelemente)
- 11: Zwischenräume (Abstreifern/Gehäuseinnenwand)
- 11': Zwischenräume (Überlappungsbereich)
- 12: Bohrungen (statische Mischelemente)
- 13: Öffnungen in der Gehäuseinnenwand
- 14: Druckarmatur bzw. lösbare Verschraubung
- 15: Brüdensammelraumgehäuse
- 16: Ablenkblech
- 17: Brüdensammelraum
- 18: Brüdenauslass
- 19: Anschlussflansch (Brüdenauslass)
- 20: Heizmitteleinlass
- 21: Heizmittelauslass
- 22: Reaktorgestell
- 23: Heizmantel
- 24: flanschartiger Vorsprung (Brüdensammelraumgehäuse)
- 25: flanschartiger Vorsprung (Reaktorgestell)
- 26: Austragsschnecke(n)
- 27: Mischguteinlass
- 28: Austragsschneckengehäuse
- 29: Öffnungen im Brüdensammelraumgehäuse
- 30: Enddeckel
- 31: Mischgutauslassöffnung
- 32: Enddeckelaussenseite
- 33: Enddeckelinnenseite
- 34: Vertiefung
- 35: Lager
- 36: Blende
- 37: Öffnung
- 38: Bolzenschrauben
- 39: Schrauben
- 40: Austragsschneckenanschlussblock
- 41: Austragsschnecke(n)
- 42: Mischguteinlassöffnung
- 43: Kanal
- 44: beschlagartiges Befestigungsstück
- 45: innerer Rahmenbereich
- 46: äusserer Rahmenbereich
- 47: Sacklochbohrungen
- 48: flanschartiges Verbindungsstück
- 49: flanschartiges Verbindungsstück
- 50: Abdichtbolzen
- 51: Anschlüsse
- 52: Bohrungen (innerer Rahmenbereich)
- 53: Bohrungen (äusserer Rahmenbereich)
- 54: seitlich offene Bohrungen (äusserer Rahmenbereich)
- 55: Röhren
- 56: Vorsprung
- 57: Streben
- 58: Bohrungen Enddeckel (umfänglich)
- 59: Motor
- 60: Getriebe
- 61,62: Dichtmittel
- 63: Mutter
- 64: Inbusschrauben
- 65: Öffnungskante
- 66: Stützen
- 68: Eintritts- und Austrittsöffnungen
- A: Antrieb
- M: Motor
- P_{M}: Mittelpunkt
- P_{O}: Punkt (obere Einschnürung)
- P_{U}: Punkt (untere Einschnürung)
- E: horizontale Achse
- F: vertikale Achse
- α,β: Winkelbereiche
- S₁, S₂,: Schenkel

## Patentansprüche

1. Reaktor/Mischer, insbesondere zur verfahrenstechnischen Behandlung von hochviskosem, elastischem und/oder feststoffhaltigem Reaktions- und Mischgut, aufweisend:
ein Gehäuse (5) mit einer Innen- sowie einer Aussenwand (6, 7), welches einen Reaktionsraum (2) definiert und zumindest zwei Wellen (4, 4') ganz oder teilweise umgibt, wobei
die Wellen (4, 4') drehbar in dem Gehäuse (5) und/oder in seitlichen Anbauteilen des Gehäuses (5) gelagert sind und von einem Motor (M) angetrieben werden, wobei
auf den Wellen (4, 4') axial zueinander versetzte, scheibenartige Elemente (8, 8') angeordnet sind, wobei die scheibenartigen Elemente (8, 8') jeweils auf ihrem Umfang nach aussen gerichtete Abstreifer (9, 9'), welche eine T-förmige Ausgestaltung haben, aufweisen,
wobei die scheibenartigen Elemente (8, 8') und/oder die T-förmigen Abstreifer (9, 9') einer Welle (4, 4') jeweils mit den scheibenartigen Elementen (8, 8') und/oder den T-förmigen Abstreifern (9, 9') einer benachbarten Welle(4, 4') sowie mit dem Gehäuse (5) eine wechselseitige kinematische Reinigung der scheibenartigen Elemente (8, 8') und/oder T-förmigen Abstreifer (9, 9') vollziehen,
**dadurch gekennzeichnet, dass**
an der Gehäuseinnenwand (5) nach innen gerichtete, stabförmige, statische Mischelemente (3) angeordnet sind, welche mit den T-förmigen Abstreifern (9, 9') der zumindest zwei Wellen (4, 4') derart zusammenwirken, dass im Bereich der Zwischenräume (10, 11) zwischen den T-förmigen Abstreifern (9, 9'), den stabförmigen, statischen Mischelementen (3) und der Gehäuseinnenwand (6) verstärkt Scherkräfte, insbesondere eine Strömungsstörung, erzeugt werden, wobei die T-förmigen Abstreifer (9, 9') jeweils zwischen zwei von den stabförmigen, statischen Mischelementen (3) greifen, wobei jeweils relativ kleine Zwischenräume gebildet werden zwischen der Oberseite des T-förmigen Abstreifers (9, 9') und der Gehäuseinnenwand (6) sowie zwischen den Seitenkanten des T-Balkens des T-förmigen Abstreifers (9, 9') und den stabförmigen, statischen Mischelementen (3) und wobei die Unterkante des T-Balkens in etwa mit den in den Reaktionsraum (2) hineinragenden Stirnseiten der benachbarten stabförmigen, statischen Mischelemente (3) fluchtet.

2. Reaktor/Mischer gemäss Anspruch 1, **dadurch gekennzeichnet, dass** die zumindest zwei Wellen (4, 4') mit jeweils gleicher Drehzahl vom Motor (M) angetrieben werden.

3. Reaktor/Mischer gemäss einem der Ansprüche 1 oder 2, **dadurch gekennzeichnet, dass** der Reaktionsraum (2) im Querschnitt in etwa die Form einer liegenden Acht mit einem Mittelpunkt (P) aufweist, durch welchen eine horizontale Achse (E) und eine vertikale Achse (F) verlaufen.

4. Reaktor/Mischer gemäss Anspruch 1 bis 3, **dadurch gekennzeichnet, dass** die statischen Mischelemente (3), ausgehend vom Mittelpunkt (P), in einem Winkelbereich α von etwa 180°, vorzugsweise etwa 150° und besonders bevorzugt etwa 120° im unteren Bereich der Gehäuseinnenwand (6) angeordnet sind.

5. Reaktor/Mischer gemäss einem der Ansprüche 1 bis 4, **dadurch gekennzeichnet, dass** die statischen Mischelemente (3) in Längsrichtung jeweils in einer Reihe miteinander fluchtend angeordnet sind.

6. Reaktor/Mischer gemäss einem der Ansprüche 1 bis 5, **dadurch gekennzeichnet, dass** die statischen Mischelemente (3) über die gesamte Länge des Reaktors/Mischers angeordnet sind.

7. Reaktor/Mischer gemäss einem der Ansprüche 1 bis 6, **dadurch gekennzeichnet, dass** dieser ein jedenfalls teilweise offenes Gehäuse (5) aufweist.

8. Reaktor/Mischer gemäss Anspruch 7, **dadurch gekennzeichnet, dass** dieser einen grossvolumigen Brüdensammelraum (17) oberhalb des jedenfalls teilweise offenen Gehäuses (5) aufweist.

9. Reaktor/Mischer gemäss Anspruch 8, **dadurch gekennzeichnet, dass** in dem grossvolumigen Brüdensammelraum (17) ein Ablenkblech (16) angeordnet ist.

## Claims

1. Reactor/mixer, intended in particular for the process engineering treatment of high-viscosity, elastic and/or solids-containing reaction material and mixed material, comprising:
a housing (5) having an inner and an outer wall (6, 7), which housing defines a reaction chamber (2) and fully or partially encloses at least two shafts (4, 4'), wherein
the shafts (4, 4') are rotatably mounted in the housing (5) and/or in lateral attachment parts to the housing (5) and are driven by a motor (M), wherein
disc-shaped elements (8, 8') displaced axially relative to one another are arranged on the shafts (4, 4'), wherein the disc-shaped elements (8, 8') in each case comprise on their circumference outward-facing scrapers (9, 9'), which have a T-shaped configuration,
wherein the disc-shaped elements (8, 8') and/or the T-shaped scrapers (9, 9') of a shaft (4, 4') carry out a reciprocal kinematic cleaning of the disc-shaped elements (8, 8') and/or T-shaped scrapers (9, 9') in each case with the disc-shaped elements (8, 8') and/or the T-shaped scrapers (9, 9') of an adjacent shaft (4, 4') and with the housing (5),
**characterized in that**
inwardly oriented rod-shaped static mixing elements (3) are arranged on the inner wall (5) of the housing, which mixing elements interact with the T-shaped scrapers (9, 9') of the at least two shafts (4, 4') in such a way that shearing forces, in particular a flow disturbance, are generated in an enhanced manner in the area of the spaces (10, 11) between the T-shaped scrapers (9, 9'), the rod-shaped static mixing elements (3) and the inner wall (6) of the housing, wherein the T-shaped scrapers (9, 9') engage respectively between two of the rod-shaped static mixing elements (3), wherein respectively relatively small spaces are formed between the upper side of the T-shaped scraper (9, 9') and the inner wall (6) of the housing, as well as between the side edges of the T-shaped beam of the T-shaped scraper (9, 9') and the rod-shaped static mixing elements (3) and wherein the lower edge of the T-shaped beam is aligned approximately with the front faces of the adjacent rod-shaped static mixing elements (3) which protrude into the reaction chamber (2) .

2. Reactor/mixer according to Claim 1, **characterized in that** the at least two shafts (4, 4') are each driven at the same rotational speed by the motor (M).

3. Reactor/mixer according to either of Claims 1 and 2, **characterized in that** the reaction chamber (2) comprises in the cross section approximately the form of a recumbent eight having a midpoint (P), through which a horizontal axis (E) and a vertical axis (F) pass.

4. Reactor/mixer according to Claim 1 to 3, **characterized in that** the static mixing elements (3), starting from the midpoint (P), are arranged in an angular range α of approximately 180°, preferably approximately 150°, and particularly preferably approximately 120° in the lower area of the inner wall (6) of the housing.

5. Reactor/mixer according to one of Claims 1 to 4, **characterized in that** the static mixing elements (3) are arranged in the longitudinal direction in each case in a row in alignment with one another.

6. Reactor/mixer according to one of Claims 1 to 5, **characterized in that** the static mixing elements (3) are arranged over the entire length of the reactor/mixer.

7. Reactor/mixer according to one of Claims 1 to 6, **characterized in that** the reactor/mixer has an at least partially open housing (5).

8. Reactor/mixer according to Claim 7, **characterized in that** the reactor/mixer has a large-volume vapour collection chamber (17) situated above the at least partially open housing (5).

9. Reactor/mixer according to Claim 8, **characterized in that** a deflector plate (16) is arranged inside the large-volume vapour collection chamber (17).

## Revendications

1. Réacteur/mélangeur, en particulier pour le traitement selon un procédé technique d'un produit de réaction et de mélange à haute viscosité, élastique et/ou contenant des matières solides, présentant :
un boîtier (5) avec une paroi intérieure et une paroi extérieure (6, 7), lequel définit une chambre de réaction (2) et entoure complètement ou partiellement au moins deux arbres (4, 4'),
les arbres (4, 4') étant positionnés de façon à pouvoir tourner dans le boîtier (5) et/ou dans des pièces rapportées latérales du boîtier (5) et étant entraînés par un moteur (M),
des éléments en forme de disque (8, 8') étant disposés de façon décalée axialement l'un par rapport à l'autre sur les arbres (4, 4'), les éléments en forme de disque (8, 8') présentant chaque fois sur leur circonférence des racleurs (9, 9') dirigés vers l'extérieur, lesquels ont une configuration en forme de T,
les éléments en forme de disque (8, 8') et/ou les racleurs (9, 9') en forme de T d'un arbre (4, 4') exécutant un nettoyage cinématique réciproque des éléments en forme de disque (8, 8') et/ou des racleurs (9, 9') en forme de T chaque fois avec les éléments en forme de disque (8, 8') et/ou les racleurs (9, 9') en forme de T d'un arbre (4, 4') adjacent ainsi qu'avec le boîtier (5),
**caractérisé en ce que**
des éléments statiques de mélange (3) en forme de barre orientés vers l'intérieur sont disposés sur la paroi intérieure (5) du boîtier, lesquels interagissent avec les racleurs (9, 9') en forme de T des au moins deux arbres (4, 4') de telle façon que des forces de cisaillement, en particulier une perturbation d'écoulement, soient générées de façon renforcée dans la région des espaces intermédiaires (10, 11) entre les racleurs (9, 9') en forme de T, les éléments statiques de mélange (3) en forme de barre et la paroi intérieure (6) du boîtier, les racleurs (9, 9') en forme de T s'engageant chaque fois entre deux des éléments statiques de mélange (3) en forme de barre, des espaces intermédiaires relativement petits étant formés chaque fois entre le côté supérieur du racleur (9, 9') en forme de T et la paroi intérieure (6) du boîtier ainsi qu'entre les arêtes latérales de la barre du T du racleur (9, 9') en forme de T et les éléments statiques de mélange (3) en forme de barre, et l'arête inférieure de la barre du T étant approximativement en affleurement avec les côtés frontaux pénétrant dans la chambre de réaction (2) des éléments statiques de mélange (3) adjacents en forme de barre.

2. Réacteur/mélangeur selon la revendication 1, **caractérisé en ce que** les au moins deux arbres (4, 4') sont entraînés par le moteur (M) avec chacun la même vitesse de rotation.

3. Réacteur/mélangeur selon l'une des revendications 1 et 2, **caractérisé en ce que** la chambre de réaction (2) présente dans la section transversale approximativement la forme d'un huit couché avec un point central (P), à travers lequel passent un axe horizontal (E) et un axe vertical (F).

4. Réacteur/mélangeur selon les revendications 1 à 3, **caractérisé en ce que** les éléments statiques de mélange (3), partant du point central (P), sont disposés avec une plage angulaire α d'approximativement 180°, préférablement approximativement 150°, et de façon particulièrement préférable approximativement 120° dans la région inférieure de la paroi intérieure du boîtier (6).

5. Réacteur/mélangeur selon l'une des revendications 1 à 4, **caractérisé en ce que** les éléments statiques de mélange (3) sont disposés dans la direction longitudinale chaque fois en une rangée en alignement l'un avec l'autre.

6. Réacteur/mélangeur selon l'une des revendications 1 à 5, **caractérisé en ce que** les éléments statiques de mélange (3) sont disposés sur la longueur totale du réacteur/mélangeur.

7. Réacteur/mélangeur selon l'une des revendications 1 à 6, **caractérisé en ce que** le réacteur/mélangeur présente un boîtier (5) au moins partiellement ouvert.

8. Réacteur/mélangeur selon la revendication 7, **caractérisé en ce que** le réacteur/mélangeur présente une chambre de collecte de vapeur (17) de grand volume au-dessus du boîtier (5) au moins partiellement ouvert.

9. Réacteur/mélangeur selon la revendication 8, **caractérisé en ce qu'**une tôle déflecteur (16) est disposée à l'intérieur de la chambre de collecte de vapeur (17) de grand volume.
